# EUROPEAN PATENT APPLICATION

(11) **EP 0 926 845 A2**
(43) Date of publication of application: **30.06.1999**
(21) Application number: 98650084.1
(22) Date of filing: 11.12.1998
(51) Int. Cl.: H04B 7/26

(54) **Method for dynamic bandwidth allocation and fast setup method for airlink protocols**

(30) Priority: 11.12.1997 US 988699
(71) Applicant: Floware System Solutions Ltd., Or-Yehuda 60250 (IL)
(72) Inventor: Freund, Amir, Or-Yehuda 60250 (IL)
(74) Representative: McCarthy, Denis Alexis

(57) **Abstract**

A method for implementation of a time saving air protocol for a system including a base station and remote terminal stations connected by an downlink channel from the base station to the remote terminal station, and by an uplink channel from the remote terminal station to the base station, the method featuring the step of sending a frame of information, from the remote terminal station to the base station on the uplink channel, said frame being a continuous transmission of a plurality of dynamically formatted bursts, each burst including a plurality of dynamically numbered adjacent time slots, such that said time slot boundaries are substantially congruent and such that a guard time is present only between bursts.

## Description

### FIELD AND BACKGROUND OF THE INVENTION

The present invention relates to air link protocols. Air link protocols are one form of air communication protocols. Air communication protocols are implemented as programs which control telecom voice and data channels over radio links. One form of these protocols uses TDMA- time division multiplex access, which is a continuous transmission of information for a short period of time using fixed time slots on a rotational pattern. The present invention particularly relates to these TDMA based protocols.

Protocol programs use successive downstream transmission from a base station to many terminal stations. Terminal stations respond with upstream transmission to the base station. This upstream transmission is performed by bursts. The present invention relates to dynamically changed bursts.

Prior art TDMA protocols have fixed time slots for each time frame in the uplink channel. A time frame is one consistently formatted package of transmitted data. Prior art protocols use constant air frame technology, in which data is transmitted wasting any unused portion of the air frames. Such waste causes inefficient usage of expensive air link time.

There is thus a widely recognized need for, and it would be highly advantageous to have, a method that provides, in a TDMA protocol uplink transmission, non- constant air time slots, dynamically changeable between time frames, and reduced waiting time for a new terminal station to be addressed.

### SUMMARY OF THE INVENTION

According to the present invention, there is provided a method for dynamic changes of time slots in bandwidths of data channels of air link protocols.

Essentially, the present invention is based upon dynamically changing size and timing of time slots within an uplink time frame. The invented method enables an efficient usage of all the bandwidth, thus eliminating wasted guard time within time frames. Guard time is used to avoid overlapping between bursts which are adjacent in time. According to the present invention, time slot boundaries are not fixed, but rather change within the time frame. Thus guard time is kept at a minimal level.

Radio telephony transmission and other telecom services are usually performed between a central base terminal and remote station terminals. Transmission between base station and terminal stations is performed using an air link protocol whose primary task is to control and manage the ongoing telecom services. An additional task of the protocol is to allocate and deal locate air band widths to and from the terminal stations.

The latter task must be done without interference to ongoing telecom services. To avoid interference, air link protocols permit an TDMA radio channel mechanism. This mechanism uses a radio link on a specific frequency. The downstream link between base station and terminal stations is executed by short and continuous time periods called bursts. The upstream link between terminal stations and base station operates over similar bursts. Bursts are assigned by a base station to each and every terminal station. Each burst has a burst start time and a duration.

The base station sends on downlink channels the timing table for each and every terminal station. According to the invented method, uplink frames are shared between terminal stations. The present invention eliminates time waste within bursts, by dynamically changing boundries of time slots within the uplink time frame. Burst time slot changes, in size and in timing, are made using resolution of only a single signal.

### BRIEF DESCRIPTION OF THE DRAWINGS

The invention is herein described, by way of example only, with reference to the accompanying drawings, wherein:
FIG. 1 shows a typical local loop system, including base station and terminal stations;
FIG . 2 is a pictorial illustration of prior art air link protocol;.
FIG. 3 is a pictorial illustration of present invention air link protocol; and
FIG. 4 is a pictorial illustration of TDMA protocol structure in a dynamically allocated burst environment.

### DESCRIPTION OF THE PREFERRED EMBODIMENTS

The present invention relates to a method of dynamic bandwidth allocation for air link protocols. An additional part of the invention relates to time saving method for uplink setup between terminal stations and the base station.

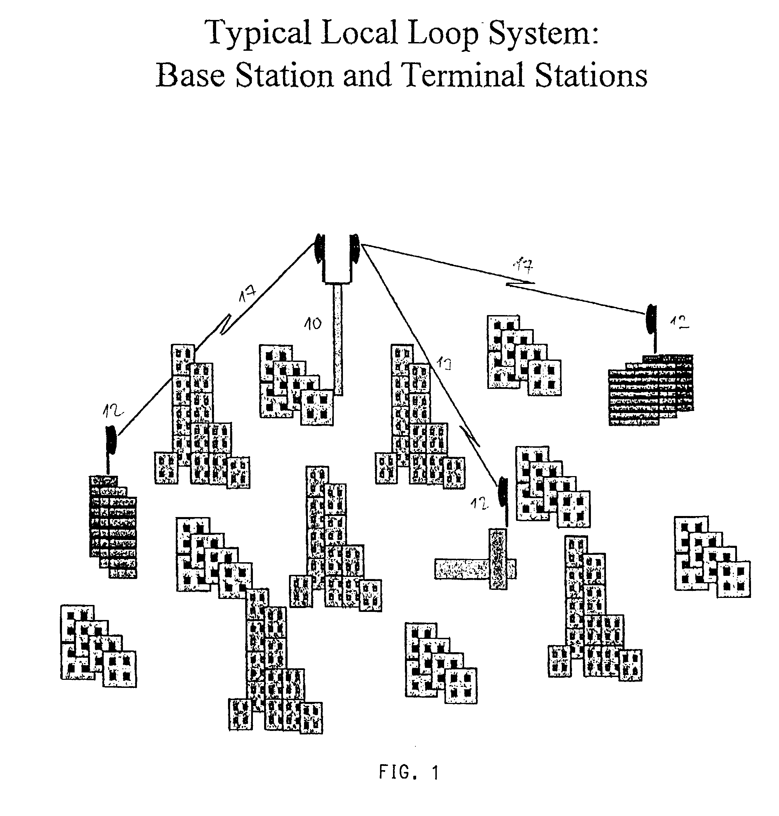

Referring now to figure 1 of the drawings, a typical system is shown for communication between base station **10** and three terminal stations **12**. Transmission between base station **10** and terminal stations **12** is performed according to an air link protocol whose primary task is to control and manage the ongoing telecom services. Another task is to allocate and re- allocate air band widths going to and from terminal stations **12**, without effecting the performance of ongoing telecom services.

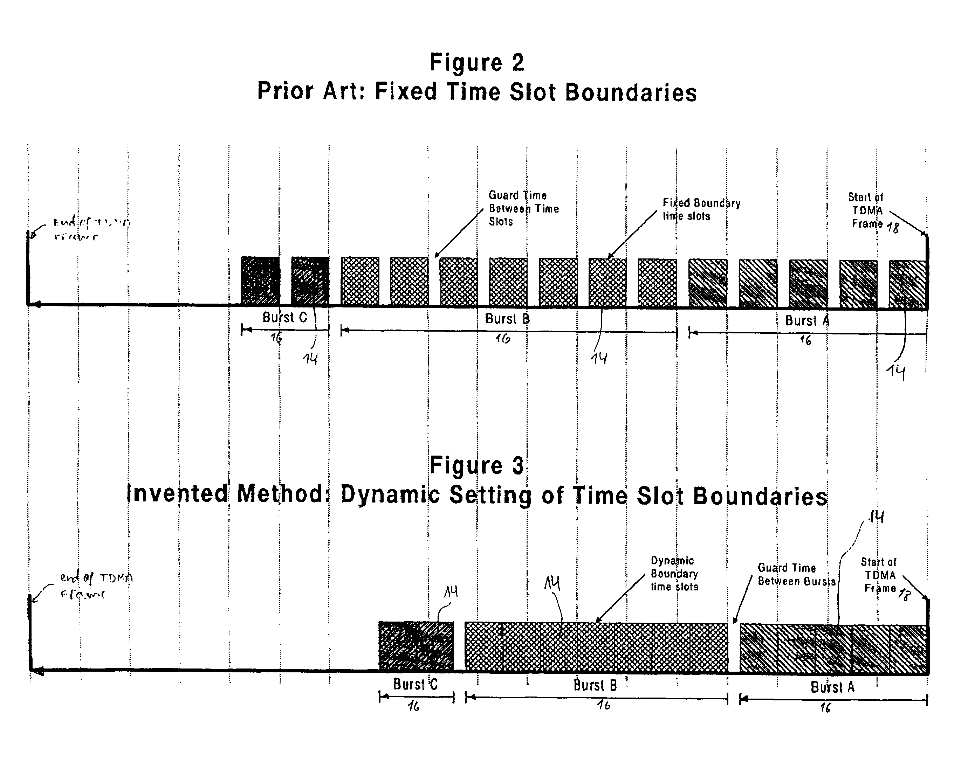

Prior art telecom air protocols as shown in Figure 2 rely upon fixed time slot slices **14**. Burst **16** is a continuous transmission for a short period of time. Each burst **16** can be dynamically set at a specific time point within the uplink frame **18**. A frame is a consistently formatted package of data. The set time point is limited within a fixed boundary of frame **18**, and cannot be changed.

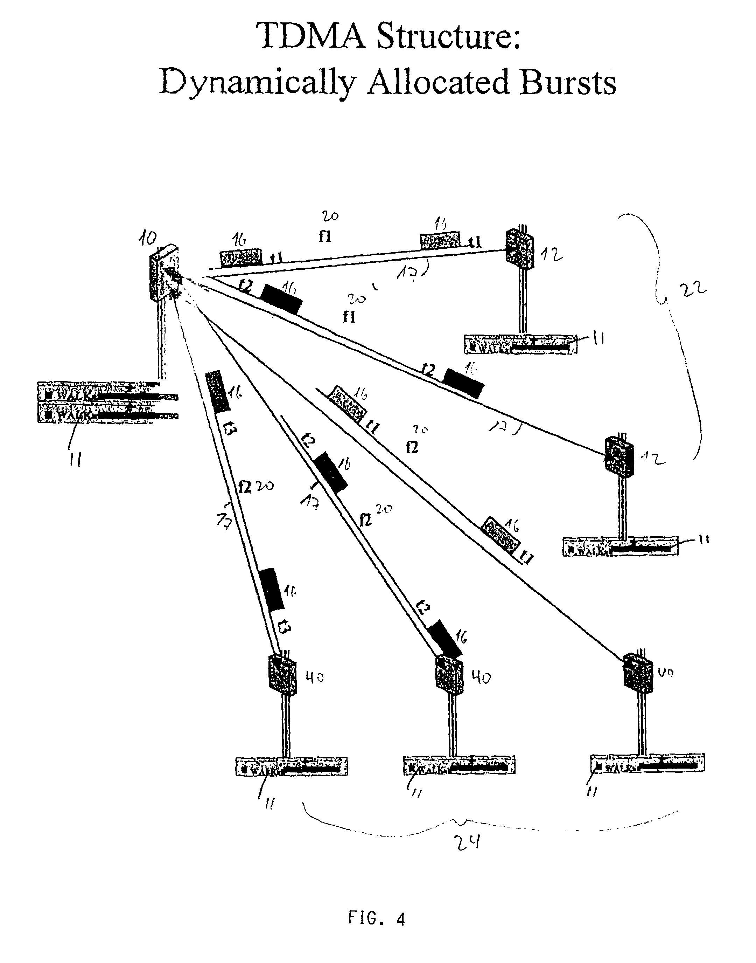

Compared with the prior art, the invented protocol (as shown in Figure 4) provides for much more flexibility. The following invented method is used: First, each burst **16** includes an integral number of time slots **14**. Each burst **16** is dynamically timed at a specific point within uplink frame **18**. Timing bursts **16** and time slots **14** within burst **16** are not limited to a fixed boundary time slot **14**, but instead are dynamically changeable. Changes to burst **16**, in size and in timing can be made using resolution of only a single signal.

This method is used on each radio wave frequency **20** (see Figure 4). Frequency f1 **20** is used for information transfer between first group **22** of stations that includes base station **10** and terminal stations **12**. Frequency f2 **20** is used for information transfer between second group **24** of stations that includes base station **10** and terminal stations **40**.

Burst timing control is performed as follows: base station **10** is responsible for timing and length of each terminal station **12** uplink burst **16**. Allocated terminal station burst **16** length is changed in view of the bandwidth requirements. The ability of burst **16** to change depends not only on the needs of a specific terminal station **12**, but rather on needs of other terminal stations **12** as well.

The invented method includes a control system. This control system includes the use of a polling mechanism to prevent possible collisions between terminal stations **12**. Collisions occur when a simultaneous transmission is made by more then one terminal station. The system also has a short communication link setup time. Communication setup time is required to set up a communication link between base station **10** and a terminal station **12**. Prior art protocols, which use polling algorithms, waste time when performing communication link setup process, due to the search for a new terminal station **12**. A new terminal station **12** needs to spend a significant amount of time, in each communication link, waiting for base station **10** to address it. This waiting time is called the polling interval.

The invented method reduces the amount of time that terminal station **12** wastes while waiting to be addressed by base station **10**. In each frame of every communication downlink, base station **10** transmits the number of terminal stations **12** that have not yet established communication link with base station **10**. Pre definition of existing terminal stations **12** is provided to base station **10** by system's operator. Periodically, base station **10** sends a search terminal station message to all the unregistered terminal stations **12**. The search message is part of the polling process. The search terminal station message includes terminal station **12** user ID number.

Terminal station **12** scans all available channels in frequency domain **20**. While searching, terminal station **12** compares the received scanned signal against a pre- defined threshold. The pre- defined threshold is the minimal signal level transmitted by base station **10**. If received signal is above the pre-defined threshold, then terminal station **12** will try to start synchronize on the received signal. If received signal is below the pre- defined threshold, or if synchronization fails, then terminal station **12** continues the frequency scan in frequency domain **20** in a cyclic manner.

When synchronized, terminal station **12** first checks if base station **10** is searching, on the uplink channel, for a number of new terminal stations **12**. If base station **10** does not search for any new terminal stations **12**, then terminal station **12** will continue the frequency scan on the uplink channel. If, on the other hand, base station **10** is searching for any positive number of new terminal stations **12**, then terminal station **12** listens to the downlink channel for a period of the polling interval. While listening, terminal station **12** waits for a search terminal station message which contains the proper ID number. If no such search message is received within the polling interval, then terminal station **12** continues the frequency scan in frequency domain **20** in a cyclic manner. If terminal station **12** receives a message that includes the specific ID number, then the polling process ends and terminal station **12** establishes a communication link with base station **10**.

While the invention has been described with respect to limited number of embodiments, it will be appreciated that many variations, modifications and other applications of the invention may be made.

## Claims

1. A method for implementation of a time saving air protocol for a system including a base station and remote terminal stations connected by an downlink channel from the base station to the remote terminal station, and by an uplink channel from the remote terminal station to the base station, the method comprising the step of:
(a) sending a frame of information, from the remote terminal station to the base station on the uplink channel, said frame being a continuous transmission of a plurality of dynamically formatted bursts, each burst including a plurality of dynamically numbered adjacent time slots, such that said time slot boundaries are substantially congruent and such that a guard time is present only between bursts.

2. The method of claim 1 further comprising the steps of:
(b) sending from the base station to the remote terminal station information on the downlink channel, and;
(c) sending from the remote terminal station to the base station a second frame with dynamically formatted bursts, such that the number of adjacent time slots is determined by said information in the downlink channel.

3. The method of claim 1, wherein said protocol is an cable link protocol for communication over point to point cables between base terminal and station terminals.

4. The method of claim 1, wherein said information is voice information.

5. The method of claim 1, wherein said information is data information.

6. The method of claim 1, wherein said information is multimedia information.

7. The method of claim 1, wherein said information is a combination of voice, data, and multimedia information.
